# EUROPEAN PATENT SPECIFICATION

(11) **EP 1 536 700 B1**
(45) Date of publication and mention of the grant of the patent: **04.10.2006**
(21) Application number: 03792237.4
(22) Date of filing: 30.07.2003
(51) Int. Cl.: A23L 1/39, A23L 1/48, A23L 1/16, A23L 1/03

(54) **BUFFERED MEAL COMPONENT AND A KIT FOR MAKING A MEAL**
GEPUFFERTE MAHLZEITENKOMPONENTE UND KIT FÜR DIE ZUBEREITUNG EINER MAHLZEIT
COMPOSANT DE REPAS TAMPONNE ET NECESSAIRE DESTINE A LA PREPARATION D'UN REPAS

(30) Priority: 19.08.2002 US 223207
(43) Date of publication of application: 08.06.2005
(73) Proprietor: UNILEVER N.V., 3013 AL Rotterdam (NL); UNILEVER PLC, London EC4P 4BQ (GB)
(72) Inventor: GIMELLI, Kenneth, LIPTON, Englewood Cliffs, NJ 07632 (US); SULLIVAN, Daniel Thomas, LIPTON, Englewood Cliffs, NJ 07632 (US)
(74) Representative: Wurfbain, Gilles L.
(86) International application number: PCT/EP2003/008451
(87) International publication number: WO 2004/017769

(56) References cited:
- WO-A-00/70971
- US-A1- 2002 054 939
- DATABASE WPI Section Ch, Week 199911 Derwent Publications Ltd., London, GB; Class D11, AN 1999-121715 XP002260077 & CN 1 196 897 A (YANTAI MEILONG GRAIN & OIL FOODSTUFF CO), 28 October 1998 (1998-10-28)
- DATABASE WPI Section Ch, Week 199018 Derwent Publications Ltd., London, GB; Class A97, AN 1990-137243 XP002260078 & KR 8 902 009 B (JANG H), 8 June 1989 (1989-06-08)
- DATABASE FSTA [Online] INTERNATIONAL FOOD INFORMATION SERVICE (IFIS), FRANFURT/MAIN, DE; ERIBO B ET AL: "Behavior of Escherichia coli O157:H7 in tomato and processed tomato products." Database accession no. 2003-00-j2875 XP002260076 & FOOD RESEARCH INTERNATIONAL 36 (8) 823-830 2003 CORRESPONDENCE (REPRINT) ADDRESS, M. ASHENAFI, INST. OF PATHOBIOL., ADDIS ABABA UNIV., PO BOX 1176, ADDIS ABABA, ETHIOPIA. E-MAIL MOGESSIE(A)AVU.ORG,

## Description

### FIELD OF THE INVENTION

The present invention is directed to a buffered meal component, like buffered pasta. Buffered in this connection measn containing an acid/base buffering system. More particularly, the present invention is directed to a kit comprising a buffered meal component, like buffered pasta, whereby a pasta dish may be prepared from the same without having to first boil the pasta in water. The kit of the present invention is suitable for cooking a meal component in a sauce that has not been subjected to temperatures that exceed about 100°C, and unexpectedly results in a meal (including side dish or snack) that looks and tastes fresh.

### BACKGROUND OF THE INVENTION

Consumers, today, typically have very busy schedules, and especially, during the work week. Because of these schedules, many consumers often do not have the time and energy to prepare a home cooked meal. Quick-to-prepare meals have been developed in order to give the consumer with a hectic schedule a chance to cook and prepare a hot meal. These quick-to-prepare meals are often in the form of TV dinners and microwavable dinners, as well as meals packaged in bags suitable for boiling. Such meals, while quick to prepare, often do not look and taste fresh like a home cooked meal; therefore, loose consumer interest.

Other options for a busy consumer include take-out meals and fast foods. These options have drawbacks since they can be expensive and often do not meet the standards required for a healthy and balanced diet.

There are increasing interests for meals that are fast and easy to prepare, yet offer the look, taste and freshness of a home cooked meal. This invention, therefore, is directed to a buffered meal component suitable for use in a kit that results in a fresh-tasting meal. The kit comprises, in addition to buffered meal component, a sauce that has not been subjected to temperatures that exceed about 100°C. Moreover, the meal that is prepared from the kit of this invention may be ready for serving in less than about 40 minutes.

There is also a demand for meals containing a sauce and another meal component, intended to be consumed in combination, in which the sauce has better quality, e.g. taste (less cooked off-taste) or texture (e.g. less over-cooked particles in the sauce). Preferably such sauces are preserved by a pasteurisation treatment, rather than a sterilisation treatment. Conventional sauces preserved by pasteurisation are usually considered to be too acidic in taste, due to the pH of pasteurised sauces required to control the outgrowth of undesired microorganisms.

Efforts have been made to provide pasta dishes. US Patent No. 2002/0054939 discloses a pasta meal, in which the pasta has been acidified to ensure shelf stability. In U.S. Patent No. 6,004,608, a flexible packaging system with spiral wound instant pasta noodles is described. Other efforts have been made to provide pasta dishes. In U.S. Patent No.5,738,876, dry, spiral shaped pasta compositions are described. Still other efforts have been disclosed that describe pasta dishes. In U.S. Patent No. 5,411,752, pasta-based food products prepared with soy protein or egg white binding agents are described.

None of the additional information above describes a meal having been prepared from a buffered meal component and a sauce that has not been subjected to temperatures that exceed about 100°C.

### SUMMARY OF THE INVENTION

In a first aspect, the present invention is directed to a kit comprising:
(a) a buffered meal component,
(b) a sauce,
wherein the buffered meal component is a carbohydrate-based product wherein the carbohydrate-based product is a pasta, and wherein the sauce has a pH from 3.5 to 4.5.

In a second aspect, the present invention is directed to a kit as above, further comprising:
(a) instructions to combine the buffered meal component with the sauce and optionally a liquid to produce a mixture comprising buffered meal component; and
(b) instructions to cook the mixture comprising the buffered meal component.

In a third aspect, the present invention is directed to a method for making a meal with the kit of the second aspect of this invention, comprising the steps of:
(a) combining a sauce, a buffered meal component comprising from 0.1% to 3.5% by weight of a buffering agent, and optionally a liquid to produce a mixture comprising a buffered meal component;
(b) cooking the mixture comprising the buffered meal component to produce a meal;
wherein the buffereing agent comprises sodium citrate, sodium malate, sodium phosphate, disodium phosphate, sodium carbonate, sodium hexametaphosphate, potassium citrate, potassium phosphate, potassium carbonate, potassium bicarbonate, potassium hexametaphosphate, potassium malate, glucono-delta lactone, buffering salts of food acids, or mixtures thereof and further wherein the sauce has a pH from 3.5 to 4.5 prior to cooking, and a pH from 4.85 to 5.75 after cooking, thereby rendering the buffered meal component substantially free of buffering agent after cooking.

Meal component, as used herein, is defined to mean a predominant component in a meal wherein the meal component is suitable to be buffered with a buffering agent (i.e., a precursor to a buffered meal component) and preferably solid before and after the meal is cooked.

Suitable to be buffered, as used herein, is defined to mean a meal component suitable to behave or act as a carrier, substrate or both for a buffering agent to thereby result in a buffered meal component.

Cook, as used herein, includes preparing on a stove top , microwave oven and baking in an oven.

Not subjected to temperatures that exceed about 100°C, means that the sauce used in this invention is not heated to temperatures that exceed about 100°C before they are actually cooked for serving, but also covers sauces that in their preparation have not been subjected to temperatures above 100°C. Such sauces are e.g. preserved by pasteurisation rather than sterilisation.

### DETAILED DESCRIPTION OF THE INVENTION

The meal component that may be used in this invention include carbohydrate-based products, wherein the carbohydrate-based products are pasta (e.g. the italian-type pasta).

The buffering agent that may be used in this invention includes any of those generally classified as suitable for use with a food product. Such a buffering agent can comprise sodium citrate, sodium malate, sodium phosphate, disodium phosphate, sodium carbonate, sodium hexametaphosphate, potassium citrate, potassium phosphate, potassium carbonate, potassium bicarbonate, potassium hexametaphosphate, potassium malate, glucono-delta lactone, buffering salts of food acids, mixtures thereof or the like.

There is essentially no limitation with respect to how the buffered meal component of the present invention is made or prepared as long as the meal component functions as a carrier or substrate for the buffering agent. In pasta the buffering agent or agents employed in this invention may be added to conventional ingredients used to make pasta (e.g., water, semolina, flour and salt), thoroughly mixed with the same and then shaped (e.g. by extrusion) to make the pasta (i.e., buffered meal component) of desired shape.

Another option for making the buffered meal component of the present invention includes rolling or physically contacting the meal component with buffering agent, as well as spraying a solution (e.g., aqueous solution) with buffering agent on to the surface of the meal component. Often, when it is not possible for the buffering agent to be mixed or added to conventional ingredients used to make the meal component the buffering agent may be applied to the meal component during a typical individually quick frozen (IQF) process.

The amount of buffering agent employed to make the buffered meal component of the present invention is typically from 0.10% to 3.0%, and preferably, from 0.15% to 2.75%, and most preferably, from 0.2% to 2.25% by weight, based on total weight of the buffered meal component, and including all ranges subsumed therein.

There is no limitation with respect to the type of sauce used in this invention other than that the sauce is suitable for human consumption. Such a sauce may be an alfredo-based sauce, a teriyaki-based sauce, a cheese-based sauce, a musroom-based sauce, a tomato-based sauce and the like. The sauces may be made with their characteristic and conventional ingredients; however, with the proviso that the sauces, which are not subjected to temperatures that exceed 100°C, comprise enough of a pH modifier to ensure that they have a pH from 3.5 to 4.5, and preferably, from 3.6 to 4.4, and most preferably, from 3.8 to 4.3, including all ranges subsumed therein.

The pH modifiers that may be used are typically food grade acids like citric acid, acetic acid, phosphoric acid, malic acid, lactic acid, mixtures thereof or the like. In addition to pH modifiers, preservatives (i.e. 0.002% to 0.2% by weight of the total weight of the sauce) may also be used in order to assist in rendering the sauces employed in this invention stable in the absence of heating the same to temperatures that exceed about 100°C.

Optional additives which may be used in the sauces employable in this invention include sugar, salt, cheese, spices, granulated vegetables, mixtures thereof or the like. The amount of optional additives employed is limited only to the extent that it does not cause the sauce of choice to have a pH over 4.5; and therefore, the general amount of such optional additives used is a matter of taste.

The kit of the present invention typically has 1 part of buffered meal component for every 0.5 to 1.5 parts of sauce, whereby parts are parts by weight and the buffered meal component and sauce do not come into contact with each other when packaged as a kit for sale. After purchasing the kit of the present invention, the consumer will be instructed, in no particular order, to combine (preferably while stirring) the buffered meal component and the sauce with each other and optionally an (aqueous) liquid, like milk, cream, water, broth (e.g., fish, chicken or beef), mixtures thereof or the like to produce a mixture comprising buffered meal component. If additionally a liquid is added, the amount of such liquid used in the mixture comprising buffered meal component and the sauce is from 1 part to 3.0 parts, and preferably, from 1.20 parts to 2.75 parts, and most preferably, from 1.30 parts to 2.5 parts of liquid for about every 1 part of buffered meal component plus sauce, whereby parts are parts by weight.

It is noted that the consumer may prepare the mixture comprising buffered meal component in a pot or pan suitable for use on a stove top, or microwave oven, or in a baking pan suitable for use in an oven. The buffered meal component, sauce and optionally a liquid that make up the mixture comprising buffered meal component only have to be cooked once by the consumer to produce a meal that looks and tastes fresh, wherein the preparation time for such a meal is less than 40 minutes, and often, from 25 minutes to 35 minutes when medium heat is used on the stove top for stove top applications and the thermostat is set at 160°C to 190°C for oven applications. Such a meal may often be prepared for serving in under 15 minutes when a microwave oven is employed.

The kit of the present invention successfully results in a fresh looking and excellent tasting meal. Additionally, the sauces used in the present invention are packaged at a pH from 3.5 to 4.5 and not subjected to temperatures that exceed about 100°C. Such a sauce is concentrated with flavor, and unexpectedly, when combined with buffered meal component, as described herein, buffering agent leaches from the buffered meal component (rendering the buffered meal component substantially free of buffering agent) to the sauce to thereby increase the pH of the sauce (to 4.85 to 5.75, and preferably, to 5.0 to 5.6), resulting in a superior looking and tasting meal.

The following examples are provided to facilitate an understanding of the present invention. The examples are not intended to limit the scope of the claims.

### Example 1

Buffered meal components, in the form of pasta, were prepared by mixing the following ingredients:

| Ingredient | Weight Percent (%) |
|---|---|
| Semolina Flour | 70.0-73.0 |
| Sodium Carbonate | 1.90-2.0 |
| Water | 20.0-22.0 |
| Olive Oil | 5.0-5.3 |

The resulting mixtures were extruded in a commercially available pasta machine to produce buffered ziti pasta.

### Example 2

The following sauces (not subjected to temperatures that exceed about 100°C and having a pH of about 4.1) were made by mixing the following ingredients:

| Ingredients | Weight Percent (%) |
|---|---|
| Tomato Paste | 58.0-61.0 |
| Alfredo Mix* | 26.0-29.0 |
| Sugar | 2.0-3.0 |
| Salt | 3.0-4.0 |
| Romano Cheese | 0.6-0.9 |
| Parmasian Cheese | 0.6-0.9 |
| Onion Powder | 0.5-0.6 |
| Garlic Powder | 0.3-0.4 |
| Granulated Onion | 0.6-0.9 |
| Granulated Garlic | 0.6-0.9 |
| Parsley | 0.1-0.2 |

| | |
|---|---|
| * Made commercially available by Unilever Bestfoods. | |

### Example 3

About 100 grams of the pasta prepared in Example 1 were mixed (in pans) with about 126 grams of the sauce of Example 2 and about 360 grams of water, producing mixtures comprising buffered meal component. The mixtures were cooked for about 30 minutes, those prepared on stove tops were cooked on medium heat and those baked in an oven were baked at about 177°C. The resulting meals looked fresh, and were excellent tasting. The resulting cooked sauces had a pH of about 5.0.

## Claims

1. A kit comprising:
a) a buffered meal component;
b) a sauce;
wherein the buffered meal component is a carbohydrate-based product, and the carbohydrate-based product is pasta, and wherein the sauce has a pH from 3,5 to 4,5.

2. A kit according to claim 1, wherein the kit further comprises:
a) instructions to combine the buffered meal component with the sauce and optionally a liquid, and
b) instructions to cook the mixture comprising the buffered meal component.

3. A kit according to claim 1-2, wherein the buffered meal component comprises from 0.1% to 3.5% by weight of a buffering agent.

4. A kit according to claim 3, wherein the buffering agent comprises sodium citrate, sodium malate, sodium phosphate, disodium phosphate, sodium carbonate, sodium hexametaphosphate, potassium citrate, potassium phosphate, potassium carbonate, potassium bicarbonate, potassium hexametaphosphate, potassium malate, glucono-delta lactone, buffering salts of food acids or mixture thereof.

5. A kit according to claim 1-4, wherein the kit comprises 1 part buffered meal component for every 0.5 to 1.5 parts of sauce.

6. A kit according to claim 1-5 wherein the instructions suggest adding a volume of liquid that equals about 1 to 3 times the weight of the buffered meal component plus the sauce.

7. A kit according to claim 1-6 wherein the instructions suggest to cook the mixture comprising the buffered meal component either on a stove top microwave oven, or in an oven for a period that does not exceed 40 minutes.

8. A kit according to claims 1-7, wherein the sauce is preserved by pasteurisation.

9. A method for making a meal comprising the steps of:
(a) combining a sauce, a buffered meal component comprising from 0.1% to 3.5% by weight of a buffering agent, and optionally a liquid to produce a mixture comprising a buffered meal component;
(b) cooking the mixture comprising the buffered meal component to produce a meal;
wherein the buffering agent comprises sodium citrate, sodium malate, sodium phosphate, disodium phosphate, sodium carbonate, sodium hexametaphosphate, potassium citrate, potassium phosphate, potassium carbonate, potassium bicarbonate, potassium hexametaphosphate, potassium malate, glucono-delta lactone, buffering salts of food acids or mixture thereof and further wherein the sauce has a pH from 3.5 to 4.5 prior to cooking, and a pH from 4.85 to 5.75 after cooking thereby rendering the buffered meal component substantially free of buffering agent after cooking.

10. The method for making a meal according to claim 9 wherein the sauce is alfredo-based, teriyaki-based, cheese-based, mushroom-based or tomato-based.

11. The method for making a meal according to claim 9-10, wherein the buffered meal component is carbohydrate-based and the carbohydrate-based buffered meal component is pasta.

## Patentansprüche

1. Kit, umfassend
a) eine gepufferte Mahlzeitenkomponente;
b) eine Soße,
wobei die gepufferte Mahlzeitenkomponente ein auf Kohlenhydrat basierendes Produkt darstellt und das auf Kohlenhydrat basierende Produkt Pasta darstellt, und wobei die Soße einen pH-Wert von 3,5 bis 4,5 aufweist.

2. Kit nach Anspruch 1, wobei das Kit weiterhin umfasst:
a) Anweisungen, um die gepufferte Mahlzeitenkomponente mit der Soße und gegebenenfalls einer Flüssigkeit zu vereinigen, und
b) Anweisungen zum Garen des Gemisches, das die gepufferte Mahlzeitenkomponente umfasst.

3. Kit nach Anspruch 1 bis 2, wobei die gepufferte Mahlzeitenkomponente 0,1 % bis 3,5 Gew.-% eines Pufferungsmittels umfasst.

4. Kit nach Anspruch 3, wobei das Pufferungsmittel Natriumcitrat, Natriummalat, Natriumphosphat, Dinatriumphosphat, Natriumcarbonat, Natriumhexametaphosphat, Kaliumcitrat, Kaliumphosphat, Kaliumcarbonat, Kaliumbicarbonat, Kaliumhexametaphosphat, Kaliummalat, Glucono-δ-lacton, puffernde Salze von Lebensmittelsäuren oder Gemisch davon umfasst.

5. Kit nach Anspruch 1 bis 4, wobei das Kit 1 Teil gepufferte Mahlzeitenkomponente für jede 0,5 bis 1,5 Teile Soße umfasst.

6. Kit nach Anspruch 1 bis 5, wobei die Anweisungen das Hinzufügen eines Volumens Flüssigkeit vorschlagen, das etwa ein- bis dreimal dem Gewicht der gepufferten Mahlzeitenkomponente plus der Soße ist.

7. Kit nach Anspruch 1 bis 6, wobei die Anweisungen vorschlagen, das Gemisch, das die gepufferte Mahlzeitenkomponente umfasst, entweder auf einem Kochfeld, Mikrowellenherd oder in einem Herd für einen Zeitraum, der 40 Minuten nicht übersteigt, zu garen.

8. Kit nach Ansprüchen 1 bis 7, wobei die Soße durch Pasteurisierung konserviert wird.

9. Verfahren zur Herstellung einer Mahlzeit, umfassend die Schritte von:
a) Vereinigen einer Soße, einer gepufferten Mahlzeitenkomponente, umfassend 0,1 % bis 3,5 Gew.-% eines Pufferungsmittels, und gegebenenfalls einer Flüssigkeit, um ein Gemisch herzustellen, das die gepufferte Mahlzeitenkomponente umfasst;
b) Garen des die gepufferte Mahlzeitenkomponente umfassenden Gemisches zur Herstellung einer Mahlzeit,
wobei das Pufferungsmittel Natriumcitrat, Natriummalat, Natriumphosphat, Dinatriumphosphat, Natriumcarbonat, Natriumhexametaphosphat, Kaliumcitrat, Kaliumphosphat, Kaliumcarbonat, Kaliumbicarbonat, Kaliumhexametaphosphat, Kaliummalat, Glucono-δ-lacton, puffernde Salze von Lebensmittelsäuren oder Gemisch davon umfasst und weiterhin wobei die Soße vor dem Garen einen pH-Wert von 3,5 bis 4,5 und nach dem Garen einen pH-Wert von 4,85 bis 5,75 aufweist, wobei die gepufferte Mahlzeitenkomponente nach dem Garen im Wesentlichen frei von Pufferungsmitteln ist.

10. Verfahren zur Herstellung einer Mahlzeit nach Anspruch 9, wobei die Soße auf Alfredo-Basis, Teriyaki-Basis, Käsebasis, Pilzbasis oder Tomatenbasis ist.

11. Verfahren zur Herstellung einer Mahlzeit nach Anspruch 9 bis 10, wobei die gepufferte Mahlzeitenkomponente auf Kohlenhydratbasis ist und die gepufferte, auf Kohlenhydrat basierende Mahlzeitenkomponente Pasta ist.

## Revendications

1. Nécessaire comprenant :
a) un composant de repas tamponné ;
b) une sauce ;
dans lequel le composant de repas tamponné est un produit à base de glucide, et le produit à base de glucide est des pâtes alimentaires, et dans lequel la sauce a un pH de 3,5 à 4,5.

2. Nécessaire selon la revendication 1, dans lequel le nécessaire comprend en outre:
a) des instructions pour combiner le composant de repas tamponné avec la sauce et facultativement un liquide, et
b) des instructions pour cuisiner le mélange comprenant le composant de repas tamponné.

3. Nécessaire selon les revendications 1 à 2, dans lequel le composant de repas tamponné comprend de 0,1 % à 3,5 % en poids d'un agent tampon.

4. Nécessaire selon la revendication 3, dans lequel l'agent tampon comprend du citrate de sodium, du malate de sodium, du phosphate de sodium, du phosphate de disodium, du carbonate de sodium, de l'hexamétaphosphate de sodium, du citrate de potassium, du phosphate de potassium, du carbonate de potassium, du bicarbonate de potassium, de l'hexamétaphosphate de potassium, du malate de potassium, de la glucono-delta lactone, des sels tampons d'acides alimentaires ou des mélanges de ceux-ci.

5. Nécessaire selon les revendications 1 à 4, dans lequel le nécessaire comprend une partie de composant de repas tamponné toutes les 0,5 à 1,5 partie de sauce.

6. Nécessaire selon les revendications 1 à 5, dans lequel les instructions suggèrent l'addition d'un volume de liquide qui est égal à environ 1 à 3 fois le poids du composant de repas tamponné plus la sauce.

7. Nécessaire selon les revendications 1 à 6, dans lequel les instructions suggèrent de cuisiner le mélange comprenant le composant de repas tamponné soit dans un four à micro-onde de cuisson, soit dans un four pendant une période qui n'excède pas 40 minutes.

8. Nécessaire selon les revendications 1 à 7, dans lequel la sauce est conservée par pasteurisation.

9. Procédé de préparation d'un repas comprenant les étapes consistant à :
a) combiner une sauce, un composant de repas tamponné contenant de 0,1 % à 3,5 % en poids d'un agent tampon et facultativement un liquide pour produire un mélange comprenant un composant de repas tamponné ;
b) cuisiner le mélange comprenant le composant de repas tamponné pour produire un repas ;
dans lequel l'agent tampon comprend du citrate de sodium, du malate de sodium, du phosphate de sodium, du phosphate de disodium, du carbonate de sodium, de l'hexamétaphosphate de sodium, du citrate de potassium, du phosphate de potassium, du carbonate de potassium, du bicarbonate de potassium, de l'hexamétaphosphate de potassium, du malate de potassium, de la glucono-delta lactone, des sels tampons d'acides alimentaires ou des mélanges de ceux-ci et dans lequel en outre la sauce a un pH de 3,5 à 4,5 avant cuisine, et un pH de 4,85 à 5,75 après cuisine rendant ainsi les composants de repas tamponné sensiblement dépourvus d'agent tampon après cuisine.

10. Procédé de préparation d'un repas selon la revendication 9, dans lequel la sauce est à base d'alfredo, à base de teriyaki, à base de fromage, à base de champignon ou à base de tomate.

11. Procédé de préparation d'un repas selon les revendications 9 à 10, dans lequel le composant de repas tamponné est à base de glucide et le composant de repas tamponné à base de glucide est des pâtes alimentaires.
